# EUROPÄISCHE PATENTANMELDUNG

(11) **EP 2 590 120 A1**
(43) Veröffentlichungstag der Anmeldung: **08.05.2013**
(21) Anmeldenummer: 11187671.0
(22) Anmeldetag: 03.11.2011
(51) Int. Cl.: G06Q 10/06

(54) **Management-Cockpit und Verfahren zur Erzeugung einer Darstellung für Daten von Prozessen**

(71) Anmelder: Siemens Aktiengesellschaft, 80333 München (DE); Fraunhofer Gesellschaft zur Förderung der angewandten Wissenschaft E.V., 80686 München (DE); Psipenta Software Systems GmbH, 10178 Berlin (DE)
(72) Erfinder: Die Erfindernennung liegt noch nicht vor

(57) **Zusammenfassung**

Ein Verfahren zur Erzeugung einer Darstellung für Daten von Prozessen (2), welche über ein Netzwerk aufrufbar sind, umfasst die folgenden Schritte:
- Erfassen von Prozessdaten (3);
- Erzeugen von Kennzahlen (5) aus den Prozessdaten (3);
- Registrieren eines Benutzers (11) oder Benutzerkreises;
- Erzeugen einer anzeigbaren Darstellung (9) von Kennzahlen (5) in Abhängigkeit von dem registrierten Benutzer (11) oder Benutzerkreis.

## Beschreibung

Die Erfindung betrifft ein Verfahren zur Erzeugung einer Darstellung für Daten von Prozessen, insbesondere im Rahmen eines Management-Cockpits. Daneben betrifft die Erfindung ein Management-Cockpit.

In Geschäfts- und Fertigungsprozessen wird aufgrund steigender Komplexität und zunehmender Arbeitsteilung eine umfassende Verfügbarkeit und Darstellung von Daten immer wichtiger.

Es existieren singuläre Lösungen für Manufacturing Execution System (MES), Kennzahlensysteme und die Modellierung von Geschäfts- und Herstellungsprozessen.

Es ist Aufgabe der Erfindung, die Darstellung für Daten von Prozessen zu verbessern.

Diese Aufgabe wird gemäß der Erfindung mit den Merkmalen des Anspruchs 1 gelöst. Vorteilhafte Weiterbildungen der Erfindung sind in den abhängigen Ansprüchen definiert.

Gemäß der Erfindung umfasst ein Verfahren zur Erzeugung einer Darstellung für Daten von Prozessen, welche über ein Netzwerk aufrufbar sind, die folgenden Schritte:
- Erfassen von Prozessdaten;
- Erzeugen von Kennzahlen aus den Prozessdaten;
- Registrieren eines Benutzers oder Benutzerkreises;
- Erzeugen einer anzeigbaren Darstellung von Kennzahlen in Abhängigkeit von dem registrierten Benutzer oder Benutzerkreis. Das Verfahren kann insbesondere im Rahmen eines Management-Cockpits Verwendung finden.

Die Schritte können auch in anderer Reihenfolge ausgeführt werden. Das Registrieren eines einzelnen Benutzers oder eines Benutzerkreises, das heißt einer Gruppe von Benutzern, die nach einem oder mehreren Merkmalen ausgewählt werden, kann zum Beispiel das Anlegen eines Accounts oder Zugangs oder das Anmelden oder Einloggen des Benutzers sein.

Der Begriff Kennzahl umfasst unter anderem wertorientierte und operative Kennzahlen, wie zum Beispiel Kosten einer Produktionsstunde, die Produktionskosten eines Produkts, die Auslastung einer Maschine oder andere technische Parameter der Fertigung oder einzelner Maschinen. Durch diese Darstellung werden Entscheidungen technischer und strategischer Art, wie zum Beispiel die Konfiguration einer Maschine oder organisatorische Entscheidungen, unterstützt.

Die Darstellung von Kennzahlen umfasst eine direkte Darstellung von (ausgewählten) Kennzahlen als auch eine Aufbereitung von Kennzahlen zum Beispiel in Form von Kennzahlensystemen, Reports oder ähnlichem.

Die Daten oder Informationen können in einer Leitwarte oder einem Management-Cockpit dargestellt werden, der bzw. dass mehrere konfigurierbare Instrumente, Dateneinheiten, wie etwa Datenfenstern, Monitore, etc. umfassen kann.

Die üblicherweise an verschiedenen Orten, wie zum Beispiel Maschinen einer Fabrik, Fabriken in einem Land oder Niederlassungen in verschiedenen Ländern, entstehenden Prozessdaten werden über ein Netzwerk, wie zum Beispiel einem Intranet, dem Internet und/oder einem Extranet, einem oder mehreren Rechnern oder Servern zugeführt, wo die Prozessdaten verarbeitet werden. Die Darstellung von Informationen kann an weiteren Rechnern wie PCs oder Terminalrechnern geschehen, die zumindest mit dem oder den Servern verbunden sind.

Das Verfahren zur Erzeugung einer Darstellung für oder von Daten von Prozessen erlaubt die gezielte Bereitstellung aktueller Informationen für unterschiedliche Benutzer, wie zum Beispiel Managementebenen, in Abhängigkeit der Prozesse. Die Prozessdaten können technischer und/oder logistischer und/oder betriebswirtschaftlicher bzw. kaufmännischer und/oder organisatorischer Art sein, wie zum Beispiel der Betriebsmodus einer Maschine, der Füllstand eines Vorrats oder die Personalstruktur einer Fabrik oder eines Unternehmens.

Aus den Kennzahlen kann in Abhängigkeit von dem registrierten Benutzer oder Benutzerkreis eine anzeigbare Auswertung erzeugt werden. Diese weitere Verarbeitung oder Aufbereitung der Kennzahlen erlaubt gewissermaßen eine Darstellung zweiter Ordnung in Form abgeleiteter Werte, die auch wieder als Kennzahlen bezeichnet werden können.

Die Prozesse können Fertigungs- und/oder Geschäftsprozesse umfassen. Die Prozesse können auf einen kleinen Umfang wie zum Beispiel eine Maschine zur Fertigung oder ein komplexeres Gebiet wie eine Fabrik ausgerichtet sein. Die Trennung zwischen Fertigung- und Geschäftsprozessen kann fließend sein, da durch vereinfachte Kommunikation mittels Netzwerken der Informationsaustausch bzw. die Verknüpfung zugenommen hat.

Die Kennzahlen, die anzeigbare Darstellung und/oder die anzeigbare Auswertung können bei Veränderung eines oder mehrerer Prozesse automatisch angepasst werden. Das Verfahren wird durch äußere Umstände wie Änderungen in den Prozessen oder Maschinen beeinflusst. Dies erlaubt eine Aktualisierung des Verfahrens bzw. der Kennzahlen und damit der anzeigbaren Informationen, d.h. der anzeigbaren Darstellung und/oder der anzeigbaren Auswertung. Diese automatische Anpassung oder Aktualisierung läuft im Hintergrund ab, d.h. ohne Steuerung durch den Benutzer. Der Benutzer oder Administrator des Systems kann Regeln oder Vorgaben bezüglich der automatischen Anpassung vorgeben und/oder der Benutzer oder Benutzerkreis kann über die Anpassungen informiert werden.

Die Benutzer oder Benutzerkreise können verschiedenen Hierarchieebenen zugeordnet sein und die anzeigbare Darstellung und/oder die anzeigbare Auswertung kann in Abhängigkeit einer oder mehrerer Hierarchieebenen erzeugt werden. Hierarchieebenen können durch funktionale oder technische Merkmale wie zum Beispiel ein Bezug zu bestimmten Maschinen oder Maschinengruppen gebildet werden. Hierarchien können auch von der Organisationsstruktur einer Fabrik oder eines Unternehmens abgeleitet werden, zum Beispiel anhand von Managementebenen.

Die anzeigbare Darstellung und/oder die anzeigbare Auswertung kann dem Benutzer dargestellt werden. Die Darstellung kann zum Beispiel an einem Computer, einer Bedieneinheit einer Maschine oder einem mobilen Gerät wie zum Beispiel einem Mobiltelefon oder Tablet-PC erfolgen.

Der Benutzer kann mittels einer oder mehrerer Eingaben die Prozesse, die Erzeugung von Kennzahlen, die Erzeugung der anzeigbaren Darstellung und/oder die Erzeugung der anzeigbaren Auswertung beeinflussen. Der Benutzer beeinflusst das Verfahren in technischer und/oder strategischer Art, wie zum Beispiel der Konfiguration einer Maschine oder in Form von organisatorischen Entscheidungen. Neben dieser Beeinflussung oder Steuerung des Prozesses kann der Benutzer auch das Verfahren beeinflussen oder steuern. Dies kann durch eine Spezifikation für die Kennzahlen oder zum Beispiel durch die individuelle Anpassung der Darstellung von Informationen geschehen. Durch die Eingabe kann ein Regelkreis entstehen, der entweder direkt durch eine Eingabe des Benutzers gesteuert wird oder automatisch im Rahmen von Vorgaben des Benutzers gesteuert wird.

Der Benutzer kann mittels einer Gestensteuerung beeinflussen. Diese Art der Benutzereingabe erlaubt ein intuitives und schnelles Arbeiten, das die volle Aufmerksamkeit auf die dargestellten Daten erlaubt. Die Gesten können mittels einer oder mehrerer Kameras oder mit einem in der Hand oder beiden Händen befindlichen Sender und einem oder mehreren Empfängern erkannt werden.

Die Prozessdaten können zur Informationsintegration in einer Staging-Datenbank zwischengespeichert und/oder transformiert werden. Mittels der Staging-Datenbank oder einem ähnlichen Hilfsmittel kann die Datenkonsistenz und -zuverlässigkeit erhöht werden. Zudem können auf einfache Weise Schnittstellen zu anderen Datensystemen und -formaten zur Verfügung gestellt werden.

Ein Datenmodell kann für die Kennzahlen erzeugt werden. Ein Datenmodell zum Beispiel für die Verwaltung der Kennzahlen oder ein Data-Warehouse unterstützen die Aggregation, Verwaltung und/oder Verarbeitung von Kennzahlen.

Die Kennzahlen können aus multidimensionalen Datencubes, wie zum Beispiel OLAP-Würfeln oder cubes (Online Analytical Processing), erzeugt werden. Diese Datencubes oder Datenwürfel bieten eine Basis für komplexe Analysen, so dass auch schwierige oder sehr umfangreiche Sachverhalte in Kennzahlen abgebildet werden können.

Ein erfindungsgemäßes Management-Cockpit umfasst Modul zum Durchführen des erfindungsgemäßen Verfahrens. das Modul kann grundsätzlich als Software oder Hardware ausgestaltet sein. In der Regel wird es sich um ein Softwaremodul handeln.

Im Folgenden wird die Erfindung anhand der Zeichnungen näher beschrieben, in denen zeigen:
Fig. 1 eine schematische Darstellung der Struktur zur Erzeugung einer Darstellung für Daten von Prozessen gemäß der Erfindung.
Fig. 2 eine weitere schematische Darstellung zur Erzeugung einer Darstellung für Daten von Prozessen gemäß der Erfindung.

Die Zeichnung dient lediglich der Erläuterung der Erfindung und schränkt diese nicht ein. Die Zeichnung und die einzelnen Teile sind nicht notwendigerweise maßstäblich. Gleiche Bezugszeichen bezeichnen gleiche oder ähnliche Teile.

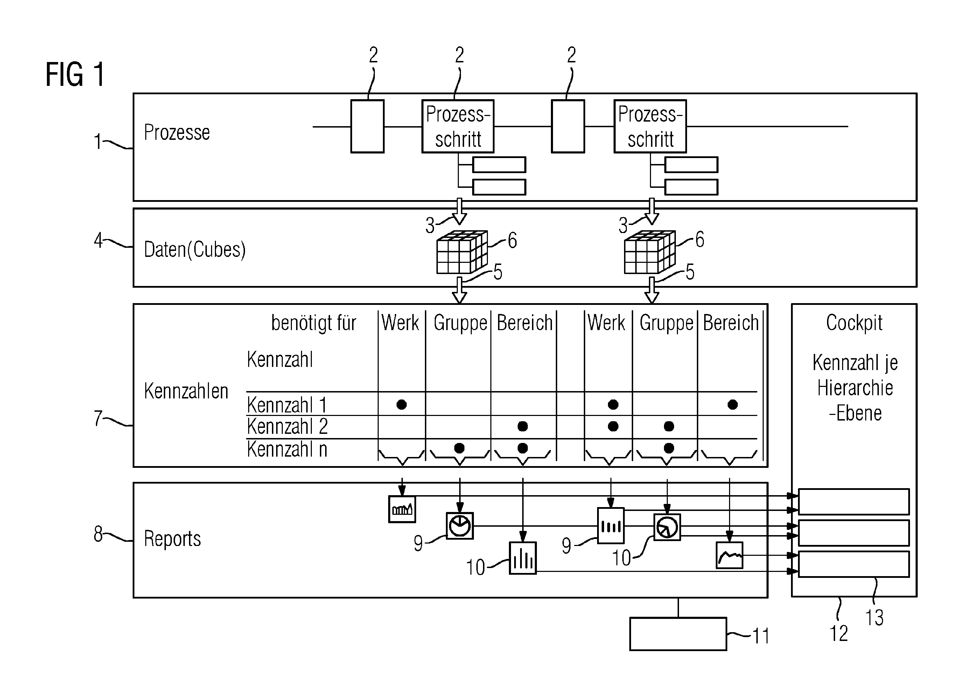

Figur 1 zeigt eine Übersicht der Stufen bzw. Schritte des Verfahrens. In einem ersten Block 1 laufen verschiedene Prozesse 2 ab, die unabhängig voneinander oder miteinander verknüpft sein können. Die Prozesse 2 können einen oder mehrere Prozessschritte umfassen. Ein Prozess 2 kann Subprozesse enthalten, die wiederum als Prozesse bezeichnet werden können. Die Prozesse 2 können technischer Art und/oder Geschäftsprozesse sein.

Aus den Prozessen 2 werden Prozessdaten 3 gewonnen oder abgeleitet. Die Prozessdaten 3 können technischer und/oder logistischer und/oder betriebswirtschaftlicher bzw. kaufmännischer und/oder organisatorischer Art sein, wie zum Beispiel der Betriebsmodus einer Maschine, der Füllstand eines Vorrats oder die Personalstruktur einer Fabrik oder eines Unternehmens. Die Prozessdaten 3 werden aus Maschinen oder Rechnern über ein Netzwerk einem Rechner oder Server zugeführt, auf dem die weiteren Schritte des Verfahrens durchgeführt werden. Die Rechner, in denen die Prozessdaten 3 erzeugt und/oder gesammelt oder abgesendet werden, können auch als Clients bezeichnet werden.

Die Prozessdaten 3, die auch als Rohdaten bezeichnet werden können, werden einem zweiten Block 4 zugeführt, in dem aus den Prozessdaten 3 Kennzahlen 5 erzeugt werden. Die Kennzahlen 5 können aus multidimensionalen Datencubes 6 erzeugt werden, die eine Basis für komplexe Analysen bilden. Die Kennzahlen 5 werden einem dritten Block 7 zugeführt, in dem die Kennzahlen 5 verwaltet, d.h. bearbeitet, verglichen, zugeordnet und/oder auf Plausibilität überprüft werden. Für eine Vergleichbarkeit kann eine definierte Anzahl standardisierter Kennzahlen 5 verwendet werden. Dabei werden Kennzahl-Objekte gebildet, die eine Information darüber enthalten, welchem Benutzerkreis die jeweilige Kennzahl 5 zugeordnet ist.

In einem vierten Block 8 werden aus den Kennzahl-Objekten anzeigbare Darstellungen 9 von Kennzahlen 5 und/oder anzeigbare Auswertungen 10, die aus den Kennzahlen 5 erzeugt werden, erzeugt. Die anzeigbaren Darstellungen 9 und die anzeigbaren Auswertungen 10 werden in Abhängigkeit von einem registrierten Benutzer oder Benutzerkreis 11 erzeugt.

Der Benutzer 11 ist eine Person, welche aktuelle Informationen über die Prozesse 2 für eine zeitverzugslose Entscheidungsfindung benötigt. Ein Benutzerkreis ist eine Gruppe von Benutzern 11, die nach einem oder mehreren Kriterien ausgewählt und organisiert sind. Dies können zum Beispiel technische maschinenbezogene Kriterien oder organisatorische Kriterien wie zum Beispiel die Zugehörigkeit zu einer bestimmten Hierarchie- oder Managementebene sein. In Figur 1 sind beispielhaft die Managementebenen "Werk", "Gruppe" und "Bereich" als Benutzerkreise genannt. Die Registrierung des Benutzers 11 kann eine einmalige Aktion wie zum Beispiel das Einrichten eines Benutzerkontos oder eine sich wiederholende Aktion wie das Anmelden auf einem Computer sein.

In einem fünften Block 12 werden die anzeigbare Darstellung oder Darstellungen 9 von Kennzahlen 5 und/oder die anzeigbare oder anzeigbaren Auswertungen 10 dem Benutzer 11 mittels einer Leitwarte oder Management-Cockpits 13 gezeigt, wobei die gezeigte Darstellung je nach Benutzerkreis, dem der Benutzer 11 angehört (bspw. Werk, Gruppe oder Bereich), variiert. Dies ist in Figur 1 durch mehrere Management-Cockpits 13 angedeutet. Eine Leitwarte 13 kann dabei aus mehreren Darstellungsgeräten wie Monitoren bestehen, ein Management-Cockpit aus mehreren Darstellungseinheiten wie bspw. Darstellungsfenstern.

Das Verfahren erlaubt die Darstellung von Kennzahlensystemen bzw. der anzeigbaren Darstellungen 9 von Kennzahlen 5 und/oder der anzeigbaren Auswertungen 10 in Abhängigkeit der aktuellen Prozesse in einem individuell konfigurierbaren Cockpit 13. Je nach Benutzer 11 und/oder Hierarchieebene werden automatisch die passenden oder relevanten Informationen oder Kennzahlensysteme dargestellt. Das Verfahren stellt eine prozessorientierte Ermittlung notwendiger Kennzahlen 5 zur Verfügung.

Aufgrund von technischen, technologischen und/oder organisatorischen Veränderungen existieren in der Regel Auswirkungen auf die Prozesse 2. Die Auswirkungen oder Änderungen in den Prozessen 2 wirken sich auf die Sichtweise und Nutzbarkeit der im Prozess verwendeten Daten aus und somit auch auf die Datencubes 6, die Kennzahlen 5, die anzeigbaren Darstellungen 9 und/oder anzeigbaren Auswertungen 10 aus. Bei Veränderungen von Prozessen 2 werden die davon betroffenen Bestandeile automatisch angepasst, so dass dem Benutzer 11 stets aktuelle Informationen dargestellt werden. Darüber hinaus kann dem Benutzer 11 angezeigt werden, welche Änderungen geschehen sind.

Der Benutzer 11 kann mittels einer oder mehrerer Eingaben die Prozesse 2, die Erzeugung von Kennzahlen 5, die Erzeugung der anzeigbaren Darstellung 9 und/oder die Erzeugung der anzeigbaren Auswertung 10 beeinflussen. Dies kann der Benutzer 11 mittels einer Gestensteuerung, welche intuitiv ausgeführt werden kann, vornehmen.

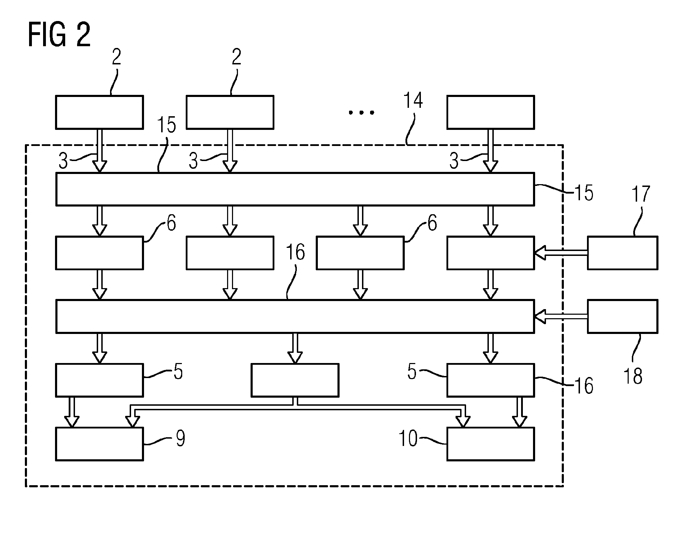

Figur 2 zeigt eine etwas detailliertere Darstellung des Verfahrens. Verschiedene Prozesse bzw. Lieferanten 2 von Prozessdaten 3, wie zum Beispiel eine Betriebsdatenerfassung (BDE), eine Maschinendatenerfassung (MDE) oder ein Fertigungsleitstand als Modul eines MES-Systems sind beispielhaft dargestellt.

Die Prozessdaten 3 werden einem Server 14, auf dem die Schritte des Verfahrens ausgeführt werden, über ein Netzwerk zugeführt. Die Prozessdaten 3 werden zunächst zur Informationsintegration in einer Staging-Datenbank 15 zwischengespeichert und/oder transformiert. Die so aufbereiteten Prozessdaten werden den mehrdimensionalen Datencubes 6 zugeführt.

Die Dokumentation der Prozesse 2 kann mit einem Modellierungswerkzeug wie zum Beispiel MO²GO (Method for Object Orientated Business Process Optimization) erfolgen. Diese Dokumentation kann das Bereitstellen von Prozessdaten 3 auch auf Basis von Modellen umfassen. Eine MO²GO Datenbank kann zur Pflege und Verwaltung von Ressourcen und Prozessen 2 sowie zur Kennzahlendefinition implementiert sein.

Die Staging-Datenbank 15 kann Vorstufe oder Bestandteil eines Business-Datawarehouses sein, in dem die gesammelten Prozessdaten 3 und/oder Kennzahlen 5 für eine umfassende Verwaltung und Betrachtung gespeichert werden. Damit können Data-Mining-Methoden zur Analyse eingesetzt werden.

Ein oder mehrere Prozesskonnektoren 16 dienen als Schnittstelle oder Bindeglied zwischen der Datenebene und den Kennzahlen 5. Die Prozesskonnektoren 16 können als MO² GO-Prozesskonnektoren ausgebildet sein, d.h. dass sie zu den MO²GO Modellierungen kompatibel sind.

Aus den Kennzahlen 5 werden wie oben beschrieben anzeigbare Darstellungen 9 und/oder anzeigbare Auswertungen 10 erzeugt.

Eine weitere Schnittstelle 17 für clients bzw. OLAP (Online Analytical Processing) Verfahren oder Geräte ist ebenso vorgesehen wie eine MO²GO Schnittstelle 18.

Die beschriebene Prozessmodellierung erlaubt eine aktuelle und flexible Ermittlung und Darstellung von Kennzahlen 5. Es wird eine Automatisierung bei der Ableitung von Kennzahlen 5 für das Management-Cockpit 13 erreicht. Dies erlaubt insbesondere bei Änderungen der Prozesse 2 eine schnelle Reaktion, so dass dem Benutzer 11 aktuelle Informationen zur Verfügung gestellt werden.

In dem Modell werden geeignete Kennzahlen 5 für die unterschiedlichen Hierarchieebenen festgelegt. Es können auch Kennzahlen 5, die aus anderen Kennzahlen berechnet werden, definiert werden. Auf Basis vergangener oder historischer Daten können Zielkorridore für Werte von Kennzahlen oder das Vorhandensein von Kennzahlen auch dynamisch ermittelt werden.

Das Modell kann auch ein Datenmodell für die Kennzahlen 5 umfassen. Das Datenmodell kann eine Applikation zur Verwaltung der Kennzahlen 5 sein. Diese Applikation umfasst zum Beispiel die Definition der Kennzahlen 5 und ihrer Formate, eine Konsistenzprüfung auf Einheitlichkeit der Kennzahlen 5 sowie eine Zuordnung der Kennzahlen 5 zu verschiedenen Bereichen wie der Herkunft oder der Zielgruppe der Kennzahlen 5.

## Patentansprüche

1. Verfahren zur Erzeugung einer Darstellung für Daten von Prozessen (2), welche über ein Netzwerk aufrufbar sind, mit den folgenden Schritten:
- Erfassen von Prozessdaten (3);
- Erzeugen von Kennzahlen (5) aus den Prozessdaten (3);
- Registrieren eines Benutzers (11) oder Benutzerkreises;
- Erzeugen einer anzeigbaren Darstellung (9) von Kennzahlen (5) in Abhängigkeit von dem registrierten Benutzer (11) oder Benutzerkreis.

2. Verfahren nach Anspruch 1, wobei aus den Kennzahlen (5) in Abhängigkeit von dem registrierten Benutzer (11) oder Benutzerkreis eine anzeigbare Auswertung (10) erzeugt wird.

3. Verfahren nach Anspruch 1 oder 2, wobei die Prozesse (2) Fertigungs- und/oder Geschäftsprozesse umfassen.

4. Verfahren nach mindestens einem der Ansprüche 1 bis 3, wobei die Kennzahlen (5), die anzeigbare Darstellung (9) und/oder die anzeigbare Auswertung (10) bei Veränderung eines oder mehrerer Prozesse (2) automatisch angepasst werden.

5. Verfahren nach mindestens einem der Ansprüche 1 bis 4, wobei Benutzer (11) oder Benutzerkreise verschiedenen Hierarchieebenen zugeordnet sind und die anzeigbare Darstellung (9) und/oder die anzeigbare Auswertung (10) in Abhängigkeit einer oder mehrerer Hierarchieebenen erzeugt wird.

6. Verfahren nach mindestens einem der Ansprüche 1 bis 5, wobei die anzeigbare Darstellung (9) und/oder die anzeigbare Auswertung (10) dem Benutzer (11) dargestellt wird.

7. Verfahren nach mindestens einem der Ansprüche 1 bis 6, wobei der Benutzer (11) mittels einer oder mehrerer Eingaben die Prozesse (2), die Erzeugung von Kennzahlen (5), die Erzeugung der anzeigbaren Darstellung (9) und/oder die Erzeugung der anzeigbaren Auswertung (10) beeinflusst.

8. Verfahren nach Anspruch 7, wobei der Benutzer (11) mittels einer Gestensteuerung beeinflusst.

9. Verfahren nach mindestens einem der Ansprüche 1 bis 8, wobei die Prozessdaten (3) zur Informationsintegration in einer Staging-Datenbank (15) zwischengespeichert und/oder transformiert werden.

10. Verfahren nach mindestens einem der Ansprüche 1 bis 9, wobei ein Datenmodell für die Kennzahlen (5) erzeugt wird.

11. Verfahren nach mindestens einem der Ansprüche 1 bis 10, wobei die Kennzahlen (5) aus multidimensionalen Datencubes (6) erzeugt werden.

12. Management-Cockpit mit einem Modul zum Durchführen des Verfahrens nach einem der Ansprüche 1 bis 11.
